# EUROPÄISCHE PATENTSCHRIFT

(11) **EP 1 321 316 B1**
(45) Veröffentlichungstag und Bekanntmachung des Hinweises auf die Patenterteilung: **18.04.2007**
(21) Anmeldenummer: 02025840.6
(22) Anmeldetag: 19.11.2002
(51) Int. Cl.: B60D 1/52

(54) **Anhängervorrichtung für Kraftfahrzeuge**
Trailer hitch for motor vehicles
Dispositif d'attelage pour véhicules automobiles

(30) Priorität: 19.12.2001 DE 20120530 U
(43) Veröffentlichungstag der Anmeldung: 25.06.2003
(73) Patentinhaber: WESTFALIA - Automotive GmbH, 33378 Rheda-Wiedenbrück (DE)
(72) Erfinder: Thülig, Werner, 33397 Rietberg (DE); Wyrwich, Martin, 33378 Rheda-Wiedenbrück (DE)
(74) Vertreter: Grosse, Wolf-Dietrich Rüdiger

(56) Entgegenhaltungen:
- EP-A- 0 593 983
- EP-A- 1 184 212
- DE-A- 2 822 662
- DE-A- 3 541 904
- DE-A- 3 601 505

## Beschreibung

Die Erfindung betrifft eine Anhängevorrichtung für Kraftfahrzeuge wie PKW, LKW oder kleine Geländewagen, umfassend einen abnehmbaren, mit einem Kugelkopf und einem abgewinkelten Ende zum Einführen in eine fahrzeugfeste Führungshülse ausgebildeten Kugelhals, wobei das Einführende in Richtung der Längsachse des abgewinkelten Endes des Kugelhalses einen zentralen Sperrbolzen aufnimmt, der einen Sperrbolzenkopf mit einem oberen Konus, einem sich daran nach unten anschließenden oberen Zylinder, einem mittleren, zum oberen Konus gleichläufigen Konus und einem unteren Zylinder aufweist, dessen mittlerer Konus zur Verriegelung auf mindestens ein im Kugelhals angeordnetes Rastmittel einwirkt, so daß dieses beim Eintauchen des Sperrbolzens teilweise ausgerückt wird und in eine korrespondierende Ausnehmung der Führungshülse eintritt.

Derartige Anhängevorrichtungen sind im Stand der Technik hinlänglich bekannt, beispielsweise aus der DE 29 35 474 C2. Damit man zu Zeiten, ohne Benutzung nicht ständig die mitunter beim Einparken störende Kugelstange (Kugelhals mit dem Kopf und dem Einführende) der Anhängevorrichtung außen am Fahrzeug mitführen muß, ist diese abnehmbar ausgeführt. Der am Fahrzeug verbleibende Teil der Anhängevorrichtung mit dem Verriegelungsmechanismus ist meist so angeordnet, daß er von außen nicht mehr sichtbar ist oder von einer Abdeckplatte verschlossen wird.

Wenn dann z.B. ein Anhänger angekoppelt werden soll, ist zur Verriegelung der Kugelstange mit der Führungshülse in dem Kugelhals ein über beispielsweise Federn oder Stößel beaufschlagbarer Sperrbolzen integriert. Nachdem der Kugelhals mit dem Sperrbolzen in die an der fahrzeugfesten Verriegelungseinrichtung angeordnete Führungshülse eingeschoben wurde, werden von dem Sperrbolzen in Bohrungen des Kugelhalses eingesetzte Kugeln beaufschlagt, so daß diese teilweise aus den Bohrungen aus- und in korrespondierende Aussparungen in der Innenwand der Führungshülse eintreten, womit der Kugelhals mit der Führungshülse verriegelt wird.

Zur Kraftbeaufschlagung der Verriegelungskugeln weist der Sperrbolzen eine bestimmte Geometrie auf. Die für die Verriegelung wichtigen Bereiche sind hierbei der obere Zylinder und der mittlere Konus. Der obere zylindrische Bereich soll hierbei eine axiale Rückstellbewegung des Sperrbolzens verhindern, falls die selbsthemmende Wirkung des mittleren Konus nicht mehr ausreicht und sich der Sperrbolzenkopf durch die Kraftbeaufschlagung der Verriegelungskugeln nach unten bewegt.

Der Erfindung liegt die Aufgabe zugrunde, eine gattungsgemäße Anhängevorrichtung mit Verriegelungseinrichtung dahingehend zu verbessern, daß eine Rückstellbewegung des Sperrbolzens verringert und die selbsthemmende Wirkung vergrößert wird.

Diese Aufgabe wird erfindungsgemäß dadurch gelöst, daß der mittlere Konus des Sperrbolzens einen halben Kegelwinkel von 3° aufweist. Mit der Erfindung wird hierbei eine seit Jahrzehnten übliche Bauweise mit einem Konuswinkel von etwa 5,5° verlassen, weil erkannt wurde, daß der erfindungsgemäße Konuswinkel nicht nur die erforderliche Selbsthemmung weiter vergrößert, sondern gleichzeitig noch weitere Vorteile mit sich bringt, wie sich zusammen mit der Erörterung der Ausgestaltungsmerkmale noch ergeben wird.

Eine bevorzugte Ausführung der Erfindung sieht vor, daß der obere Zylinder mit einem einschnürenden Radius, bezogen auf die Längsachse des Sperrbolzens, ausgebildet ist. Aufgrund dieser Taillierung im Übergang zwischen dem zylindrischen Bereich und dem mittleren Konus wird ein identischer Durchmesser für das zylindrische Ende und den konischen Anfang des Sperrbolzens erreicht, d.h. eine Parallelverschiebung nach außen. Damit läßt sich die Rückstellbewegung des Sperrbolzens im Verriegelungsmechanismus auf ein Minimum reduzieren.

Gemäß einer alternativen Ausführung ist es gleichwohl möglich, daß der obere Zylinder mit einer gegenläufigen Schräge hin zum mittleren Konus versehen ist.

Beide geometrischen Varianten des Sperrbolzens ermöglichen in Verbindung mit dem geringeren Konuswinkel zum einen die Begrenzung der Rückstellbewegung im Verriegelungsmechanismus, welche aufgrund von starken Lastwechseln bei großen Anhängelasten noch begünstigt wird. Zum anderen wird eine größere Selbsthemmung des Sperrbolzens im verriegelten Zustand erreicht.

Nach einer weiteren Ausgestaltung der Erfindung wird vorgeschlagen, daß zwischen dem mittleren Konus und dem unteren Zylinder ein unterer Konus mit einem Konuswinkel größer 3° ausgebildet ist. Damit läßt sich der auf gleicher axialer Länge kleinere Durchmesser des mittleren Konus im Sperrbolzen insgesamt wieder vergrößern. Je nach Anhängelast am Kugelkopf steht zur ausreichenden Klemmung der Verriegelungskugeln durch den Sperrbolzenkopf die gesamte Länge sowohl des mittleren als auch des unteren Konusbereiches zur Verfügung. Der Anstieg des unteren Konuswinkels hin zum unteren Zylinder dient weiterhin als zusätzliche Hemmung, wodurch ebenfalls ein zu weites Durchrutschen des Spenbolzens nach oben hin begrenzt wird. Es entsteht weiterhin auch kein Spiel zwischen den Verriegelungskugeln und dem Sperrbolzen. Die Länge des unteren Konus kann so festgelegt werden, daß je nach Belastungsfall im Anhängebetrieb ein ausreichend großer Nachstellweg des Sperrbolzens gewährleistet wird.

Weitere Merkmale und Vorteile der Erfindung ergeben sich aus den Ansprüchen und der nachfolgenden Beschreibung von in den Zeichnungen dargestellten Ausführungsbeispielen der Erfindung. Es zeigen:
- Fig. 1: einen Teilschnitt durch eine Verriegelungseinrichtung einer Anhängevorrichtung;
- Fig. 2: einen Sperrbolzen der Verriegelungseinrichtung in der Seitenansicht dargestellt; und
- Fig. 3: eine weitere Ausführung eines Sperrbolzens in der Seitenansicht dargestellt.

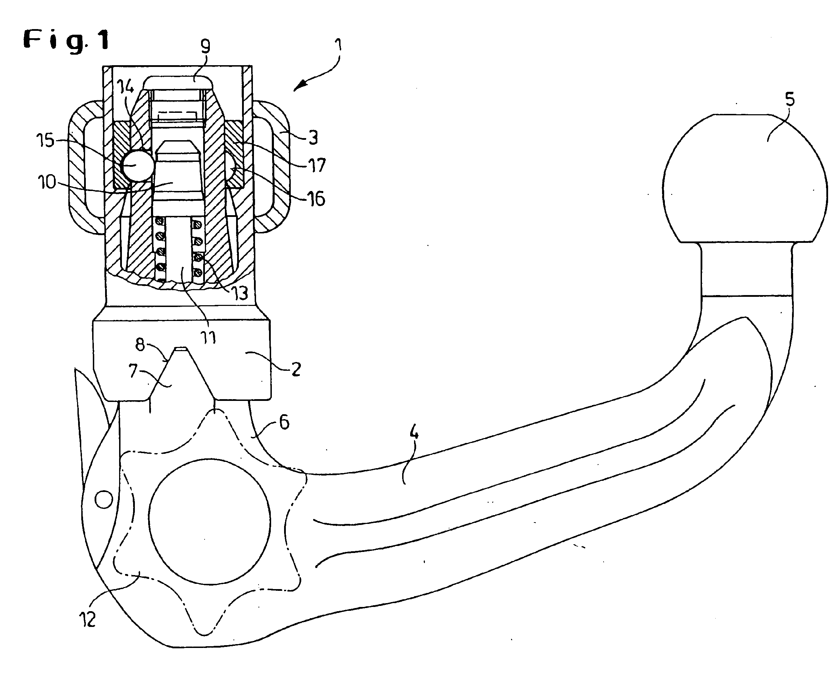

Die in Fig. 1 dargestellte Anhängevorrichtung 1 weist eine vertikal verlaufende Führungshülse 2 auf, die an einem Querträger 3 befestigt ist, der ortsfest an einem Fahrzeug angeordnet wird. Die Führungshülse 2 dient zur Aufnahme eines abnehmbaren Kugelhalses 4 mit einem Kugelkopf 5 (insgesamt auch Kugelstange genannt), wobei der Kugelhals 4 zum Einführen in die Führungshülse 2 ein abgewinkeltes Einführende 6 aufweist. Als Endanschlag beim Einschieben des Kugelhalses 4 in die Führungshülse 2 und gleichzeitig als Verdrehsicherung dienen zwei sich an beiden Seiten des Kugelhalses 4 diametral gegenüberliegende, etwa dreieckige Zapfen 7, die in komplementäre Führungsausnehmungen 8 am unteren Ende der Hülse 2 eingreifen.

In das Einführende 6 wird ein Sperrbolzen 10 eingesetzt, der mit Abstand zum oberen, von einer Einschraubkappe 9 verschlossenen Einführende angeordnet ist und an seinem unteren Ende mit einer Zahnstange 11 ausgebildet ist, die sich mittels eines Handrades 12 verstellen läßt. Der Sperrbolzen 10 wird in der Einbaulage von einer Druckfeder 13 axial beaufschlagt und wirkt auf im Ausführungsbeispiel in radiale Bohrungen 14 im Kugelhals 4 eingesetzte Kugeln 15 ein - hier sind umfangsverteilt drei Kugeln vorgesehen -, die so mit einer Kugelkalotte in entsprechende Aussparungen 16 eines an der Innenwand der Führungshülse 2 angeordneten Lagerringes 17 gedrückt werden. Dadurch wird der Kugelhals 4 über sein Einführende 6 verdrehsicher mit der Führungshülse 2 verriegelt. Statt Kugeln könnten alternativ z.B. auch Stifte als Verriegelungsmittel eingesetzt werden, wobei im einfachsten Fall eine Kugel bzw. ein Stift oder dergleichen ausreichend sein könnte.

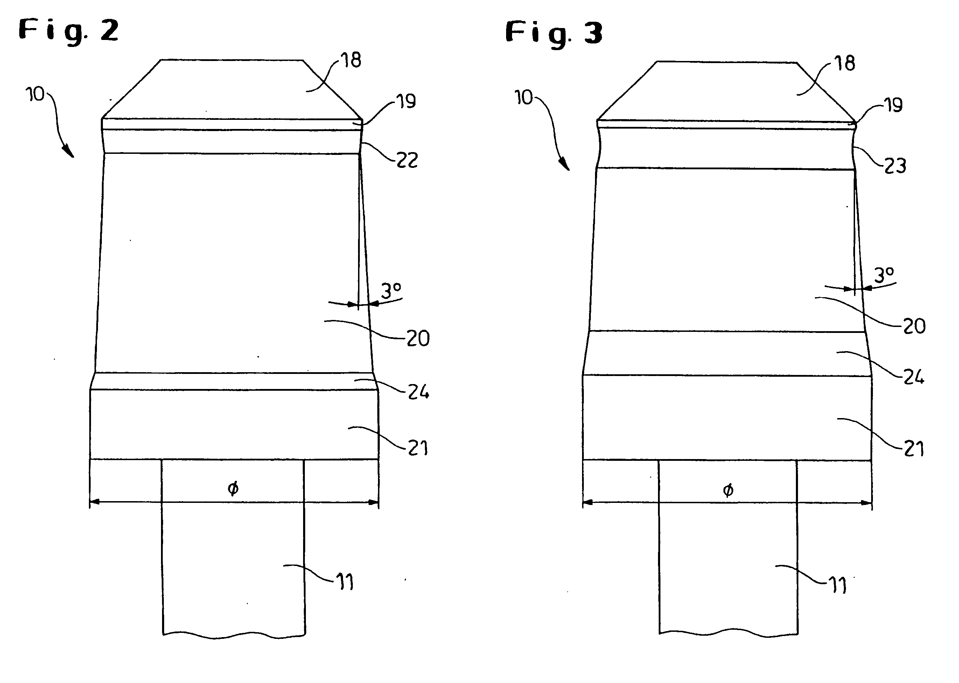

Wie sich aus den Fig. 2 und 3 ergibt, weist der Sperrbolzen 10 zum sicheren Verriegeln eine spezielle Geometrie auf. Der Sperrbolzen 10 besteht gemäß beiden Ausführungen aus einem oberen Konus 18, einem sich daran anschließenden oberen Zylinder 19, einem mittleren Konus 20 und einem unteren Zylinder 21. Der mittlere Konus 20 des Sperrbolzens 10 weist jeweils einen Konuswinkel von 3° auf. Durch den gegenüber bisher üblichen Konuswinkeln kleineren Konuswinkel von 3° wird im verriegelten Zustand eine höhere Selbsthemmung erzielt. Außerdem wird eine mögliche Rückstellbewegung des Sperrbolzens 10, hervorgerufen von unterschiedlichen Belastungen am Kugelkopf 5, verringert.

In Fig. 3 ist eine Ausführung des Sperrbolzens 10 dargestellt, bei der der obere Zylinder 19 mit einem einschnürenden Radius 23 bezogen auf die Längsachse des Sperrbolzens 10 ausgebildet ist. Damit wird ein zu dem oberen Zylinder 19 identischer Durchmesser im Übergangsbereich zum mittleren Konus 20 erreicht. Der obere zylindrische Bereich begrenzt im Zusammenspiel mit der Einschnürung 23 insgesamt eine Rückstellbewegung des Sperrbolzens 10, falls die selbsthemmende Wirkung des mittleren Konus 20 bei sehr hohen Belastungen am Kugelhals 4 und dem Kugelkopf 5 nicht ausreicht und sich der Sperrbolzen 10 durch die Kraftbeaufschlagung der Verriegelungskugeln 15 nach unten bewegt. Eine solche Bewegungsbegrenzung wird auch erreicht, wenn der Sperrbolzen 10 gemäß der in Figur 2 gezeigten Alternative am oberen Zylinder 19 mit einer gegenläufigen Schräge 22 hin zum mittleren Konus 20 ausgebildet ist.

Weiterhin ist an den Sperrbolzen 10 zwischen dem mittleren Konus 20 und dem unteren Zylinder 21 ein unterer Konus 24 mit einem Konuswinkel größer 3° ausgebildet. Der Anstieg des unteren Konuswinkels hin zum unteren Zylinder 21 ermöglicht eine zusätzliche Hemmung des Sperrbolzens 10, wodurch ein zu weites Durchrutschen des Sperrbolzens 10 nach oben hin verhindert wird. Weiterhin entsteht somit auch kein Spiel zwischen den Verriegelungskugeln 15 und dem Sperrbolzen 10.

Die Länge des unteren Konus 24 kann variieren, vgl. hierzu Fig. 2 und 3, so daß je nach Belastungsfall im Anhängerbetrieb ein ausreichend großer Nachstellweg des Sperrbolzens 10 gewährleistet wird.

## Patentansprüche

1. Anhängevorrichtung (1) für Kraftfahrzeuge, umfassend einen abnehmbaren, mit einem Kugelkopf (5) und einem abgewinkelten Ende zum Einführen in eine fahrzeugfeste Führungshülse (2) ausgebildeten Kugelhals (4), wobei das Einführende (6) in Richtung der Längsachse des abgewinkelten Endes des Kugelhalses (4) einen zentralen Sperrbolzen (10) aufnimmt, der einen Sperrbolzenkopf mit einem oberen Konus (18), einem sich daran nach unten anschließenden oberen Zylinder (19), einem mittleren, zum oberen Konus gleichläufigen Konus (20) und einem unteren Zylinder (21) aufweist, dessen mittlerer Konus (20) zur Verriegelung auf mindestens ein im Kugelhals angeordnetes Rastmittel (15) einwirkt, so daß dieses beim Eintauchen des Sperrbolzens (10) teilweise ausgerückt wird und in eine korrespondierende Ausnehmung (16) der Führungshülse (2) eintritt,
**dadurch gekennzeichnet,**
**daß** der mittlere Konus (20) des Sperrbolzens (10) einen halben Kegelwinkel von 3° aufweist.

2. Anhängevorrichtung nach Anspruch 1,
**dadurch gekennzeichnet,**
**daß** der obere Zylinder (19) mit einer Einschnürung (23) ausgebildet ist.

3. Anhängevorrichtung nach Anspruch 1,
**dadurch gekennzeichnet,**
**daß** der obere Zylinder (19) mit einer gegenläufigen Schräge (22) hin zum mittleren Konus (20) versehen ist.

4. Anhängevorrichtung nach einem der Ansprüche 1 bis 3,
**dadurch gekennzeichnet,**
**daß** zwischen dem mittleren Konus (20) und dem unteren Zylinder (21) ein unterer Konus (24) mit einem Konuswinkel größer 3° ausgebildet ist.

## Claims

1. A tow bar (1) for motor vehicles, comprising a removable ball neck (4) constructed with a ball head (5) and a bent end for insertion into a guide sleeve (2) fixed on the vehicle, wherein the insertion end (6) receives a central locking pin (10) in the direction of the longitudinal axis of the bent end of the ball neck (4), which pin comprises a locking pin head with an upper cone (18), an upper cylinder (19) which adjoins said cone at the bottom, a central cone (20) in the same direction as the upper cone and a lower cylinder (21), whose central cone (20) acts on at least one locating means (15) arranged in the cone neck for locking, so that said locating means is partly disengaged on insertion of the locking pin (10) and enters into a corresponding recess (16) of the guide sleeve (2),
**characterised in that**
the central cone (20) of the locking pin (10) has a cone half-angle of 3°.

2. The tow bar according to claim 1, **characterised in that** the upper cylinder (19) is formed with a constriction (23).

3. The tow bar according to claim 1, **characterised in that** the upper cylinder (19) is provided with an oppositely directed slope (22) towards the central cone (20).

4. The device according to one of claims 1 to 3, **characterised in that** a lower cone (24) having a cone angle greater than 3° is formed between the central cone (20) and the lower cylinder (21).

## Revendications

1. Dispositif d'attelage (1) pour des véhicules automobiles, comprenant un col de rotule (4) amovible, conçu avec une tête sphérique (5) et une extrémité coudée destinée à être introduite dans une douille de guidage (2) stationnaire sur le véhicule, l'extrémité à introduire (6) réceptionnant en direction de l'axe longitudinal de l'extrémité coudée du col de rotule (4) un boulon de blocage central (10) comportant une tête de boulon de blocage avec un cône supérieur (18), un cylindre supérieur (19), se raccordant vers le bas sur ce dernier, un cône central (20) de même direction que le cône supérieur et un cylindre inférieur (21), dont le cône central (20) agit pour le verrouillage sur au moins un moyen d'enclenchement (15) placé dans le col de rotule (4), de sorte que lorsque le boulon de blocage (10) plonge, il soit partiellement poussé vers l'extérieur et s'engage dans un évidement (16) correspondant de la douille de guidage (2),
**caractérisé en ce que** le cône central (20) du boulon de blocage (10) comporte un demi angle conique de 3°.

2. Dispositif d'attelage selon la revendication 1, **caractérisé en ce que** le cylindre supérieur (19) est conçu avec un collet (23).

3. Dispositif d'attelage selon la revendication 1, **caractérisé en ce que** le cylindre supérieur (19) est muni d'une inclinaison (22) à contresens, en direction du cône central (20).

4. Dispositif d'attelage selon l'une quelconque des revendications 1 à 3, **caractérisé en ce qu'**un cône inférieur (24) avec un angle conique supérieur à 3° est conçu entre le cône central (20) et le cône inférieur (21).
